# EUROPEAN PATENT SPECIFICATION

(11) **EP 4 273 687 B1**
(45) Date of publication and mention of the grant of the patent: **17.09.2025**
(21) Application number: 21924428.2
(22) Date of filing: 17.12.2021
(51) Int. Cl.: G06F 3/0486, G06F 3/04817

(54) **PICTURE SHARING METHOD AND ELECTRONIC DEVICE**
BILDTEILUNGSVERFAHREN UND ELEKTRONISCHE VORRICHTUNG
PROCÉDÉ DE PARTAGE D'IMAGE ET DISPOSITIF ÉLECTRONIQUE

(30) Priority: 08.02.2021 CN 202110171788
(43) Date of publication of application: 08.11.2023
(73) Proprietor: Petal Cloud Technology Co., Ltd., Dongguan, Guangdong 523799 (CN)
(72) Inventor: XU, Tiansong, Shenzhen, Guangdong 518129 (CN); YIN, Zhenling, Shenzhen, Guangdong 518129 (CN)
(74) Representative: Gill Jennings & Every LLP
(86) International application number: PCT/CN2021/139317
(87) International publication number: WO 2022/166435

(56) References cited:
- CN-A- 103 294 559
- CN-A- 104 216 905
- CN-A- 104 282 032
- CN-A- 106 202 194
- CN-A- 106 489 126
- CN-A- 106 603 823
- CN-A- 107 896 279
- CN-A- 108 174 022
- CN-A- 108 563 684
- CN-A- 110 865 745
- CN-A- 111 290 675
- CN-B- 107 066 188
- US-A1- 2011 080 356
- US-A1- 2014 109 011

## Description

This application claims priority to Chinese Patent Application No. 202110171788.2, filed with the China National Intellectual Property Administration on February 8, 2021 and entitled "PICTURE SHARING METHOD AND ELECTRONIC DEVICE".

### TECHNICAL FIELD

This application relates to the field of electronic technologies, and in particular, to a picture sharing method and an electronic device.

### BACKGROUND

In a process of using an electronic device, a user frequently captures a screenshot of a display interface on a screen of the electronic device (a screen capture for short), and shares, with some applications, a picture obtained through screen capturing. For example, if a home page of an application is currently displayed on the screen of the electronic device, the user may perform screen capturing to obtain a home page picture of the application, and share the home page picture with another application, for example, share the home page picture with a contact in a chat application.

In a conventional technology, when the user wants to share a screen capture, the user usually presses a screen-capture shortcut key or invokes a screen-capture button to trigger a screen-capture operation, and then performs a sharing operation on an obtained picture to complete a process of sharing a screen capture.

However, in the conventional technology, the process of sharing a screen capture is relatively complicated, resulting in poor use experience of the user.

US 2014/0109011 A1 discloses a handheld communication device having a logic to transfer information from a first application to a second application by using a user interface which displays a screen shot of the information gathered at the first application, and the interface also displays a list of icons indicative of other applications that is capable of receiving such information and using such information. The logic is configured to transfer the information to the second application by a drag-and-drop motion on the interface page.

### SUMMARY

This application provides a picture sharing method and an electronic device, to simplify an operation process of sharing a screen capture by a user, and greatly improve use experience of the user.

According to a first aspect, this application provides a picture sharing method, applied to an electronic device, including: when a first operation entered by a user by using a target display interface is detected, in response to the first operation, obtaining a screenshot of at least one display interface corresponding to a first application; and sending the screenshot of the at least one display interface to a second application, where the target display interface includes at least one of an icon of the first application and a current display interface of the first application, the target display interface includes at least one of an icon of the second application and a current display interface of the second application, and the first operation includes dragging the at least one of the icon of the first application and the current display interface of the first application to a position area in which the at least one of the icon of the second application and the current display interface of the second application is located.

The target display interface may be a task list interface, and the interface displays an application in a running state. In addition to the drag operation, the first operation may be another operation such as double-tap. The current display interface of the first application is a display interface that is last displayed when the first application is in a foreground running state. On the task list interface, the first application may be represented by the current display interface, or may be represented by the icon. The icon may be a desktop icon or another icon that may identify the application.

In the foregoing implementation, the user may share a screenshot of the current display interface of the first application with the second application by entering the first operation on the target display interface of the electronic device. In this process, the user can complete screenshot sharing by performing only a simple drag or tap operation. Therefore, in this embodiment, a picture sharing process is relatively fast, time costs of sharing a screen capture by the user are reduced, and use experience of the user is greatly improved.

With reference to the first aspect, in some implementations of the first aspect, the at least one display interface includes the current display interface of the first application.

In the foregoing implementation, the electronic device may send the screenshot of the current display interface of the first application to the second application, so that real-time sharing of the screenshot may be implemented, thereby further improving use experience of the user.

With reference to the first aspect, the obtaining a screenshot of at least one display interface corresponding to a first application includes: obtaining an application identifier of the first application; and obtaining, from a memory, a screenshot of a display interface corresponding to the application identifier of the first application.

The application identifier of the first application may be an application name, an ID, or the like. A correspondence between an application identifier and a display interface screenshot is stored in the memory. The display interface screenshot may be a screenshot of a historical display interface of the first application that is stored in the electronic device before the user enters the first operation.

In the foregoing implementation, the electronic device may send all screenshots of the historical display interface of the first application to the second application, so that a quantity of times that the user sends a screenshot may be reduced, and sharing of these screenshots can be completed by using a simple drag or tap operation, thereby further improving use experience of the user.

With reference to the first aspect, a screenshot stored in the memory is obtained by filtering a candidate screenshot set, and the candidate screenshot set includes all screenshots obtained by capturing a display interface of the electronic device.

The electronic device may store, in the candidate screenshot set, a plurality of display interface screenshots obtained by capturing the display interface of the electronic device, and then filter the display interface screenshots in the candidate screenshot set, for example, filter the display interface screenshots based on content of each display interface screenshot, or filter the display interface screenshots based on a capture time of each display interface screenshot.

In the foregoing implementation, the electronic device may remove some unnecessary screenshots by filtering all obtained screenshots of the display interface, to reduce memory power consumption of the electronic device.

With reference to the first aspect, in some implementations of the first aspect, a manner of filtering the candidate screenshot set includes: grouping display interface screenshots in the candidate screenshot set, and selecting a target display interface screenshot from each group of display interface screenshots, where a similarity between display interface screenshots in each group of display interface screenshots is greater than or equal to a similarity threshold.

In the foregoing implementation, the candidate screenshot set is filtered, and only filtered display interface screenshots are stored, so that memory power consumption of the electronic device may be greatly reduced. In addition, when the filtered display interface screenshots are displayed to the user, a quantity of displayed screenshots may be reduced, so that the user can more easily select an expected picture, thereby further improving use experience of the user.

With reference to the first aspect, in some implementations of the first aspect, a manner of obtaining the candidate screenshot set includes: when a second operation entered by the user is detected, in response to the second operation, separately capturing the display interface of the electronic device at a preset time interval, to obtain the candidate screenshot set, where the second operation is used by the electronic device to enable a continuous screenshot mode.

The second operation may be any one of the following operations performed by the user on a screen: double-tap, tapping a continuous screenshot control, and pressing a continuous screenshot shortcut key (for example, simultaneously pressing a volume up button and a home button); or may be another operation. The preset time interval may be any interval between 0.5 seconds and 2 seconds, or may be another relatively short time interval.

In the foregoing implementation, the electronic device obtains a plurality of display interface screenshots in the continuous screenshot mode, and when receiving a screenshot sharing operation of the user, sends all display interface screenshots corresponding to the first application to the second application, so that the user does not need to perform sequential selection. This reduces a quantity of selection times of the user, and improves picture sharing efficiency of the user.

With reference to the first aspect, in some implementations of the first aspect, the icon of the first application and the icon of the second application are desktop icons. The first application and the second application are displayed in a form of a desktop icon, which conforms to a daily use habit of the user, so that the user can quickly find a target application for sharing, thereby further improving use experience of the user.

According to a second aspect, an embodiment of this application provides an apparatus. The apparatus is included in an electronic device, and the apparatus has a function of implementing behavior of the electronic device in the first aspect and the possible implementations of the first aspect. The function may be implemented by hardware, or may be implemented by executing corresponding software by hardware. The hardware or the software includes one or more modules or units corresponding to the foregoing function, for example, a processing module or unit, or a display module or unit.

According to a third aspect, an embodiment of this application provides an electronic device. The electronic device includes a processor, a memory, and an interface. The processor, the memory, and the interface cooperate with each other, so that the electronic device performs any method in the technical solution of the first aspect.

According to a fourth aspect, an embodiment of this application provides a chip, including a processor. The processor is configured to read and execute a computer program stored in a memory, to perform the method according to any one of the first aspect or the possible implementations of the first aspect.

Optionally, the chip further includes a memory, and the memory is connected to the processor by using a circuit or a wire.

Further, optionally, the chip further includes a communications interface.

According to a fifth aspect, an embodiment of this application provides a computer-readable storage medium. The computer-readable storage medium stores a computer program, and when the computer program is executed by a processor, the processor is enabled to perform any method in the technical solution of the first aspect.

According to a sixth aspect, an embodiment of this application provides a computer program product. The computer program product includes computer program code, and when the computer program code is run on an electronic device, the electronic device is enabled to perform any method in the technical solution of the first aspect.

### BRIEF DESCRIPTION OF DRAWINGS

FIG. 1 is a schematic diagram of a picture sharing process according to a conventional technology;
FIG. 2 is a schematic diagram of a structure of an electronic device according to an embodiment of this application;
FIG. 3 is a block diagram of a software structure of an electronic device according to an embodiment of this application;
FIG. 4 is a diagram of a system architecture of a picture sharing method according to an embodiment of this application;
FIG. 5 is a schematic flowchart of a picture sharing method according to an embodiment of this application;
FIG. 6 is a schematic diagram of a task list interface according to an embodiment of this application;
FIG. 7 is a schematic flowchart of another picture sharing method according to an embodiment of this application;
(a) in FIG. 8 is a schematic diagram of a display interface displayed when a second application is switched to a foreground running state according to an embodiment of this application;

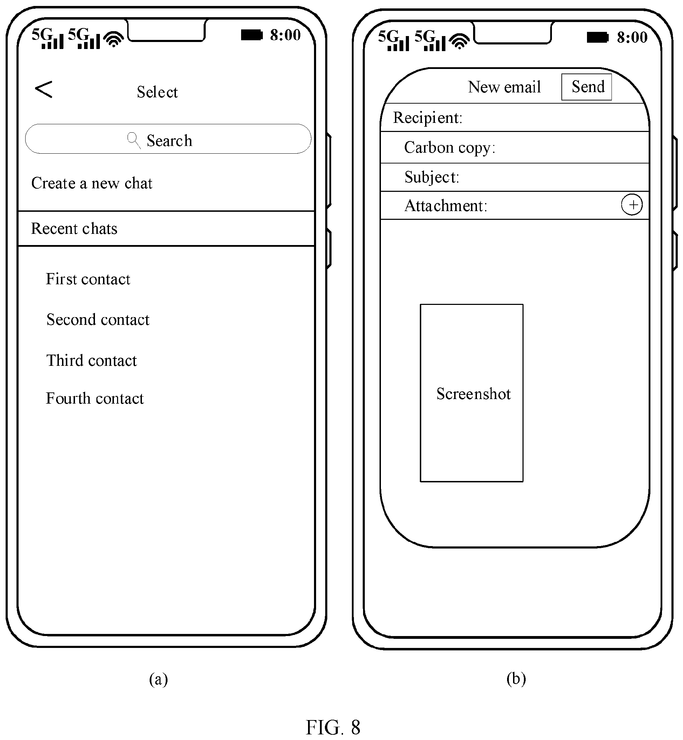

(b) in FIG. 8 is a schematic diagram of another display interface displayed when a second application is switched to a foreground running state according to an embodiment of this application;

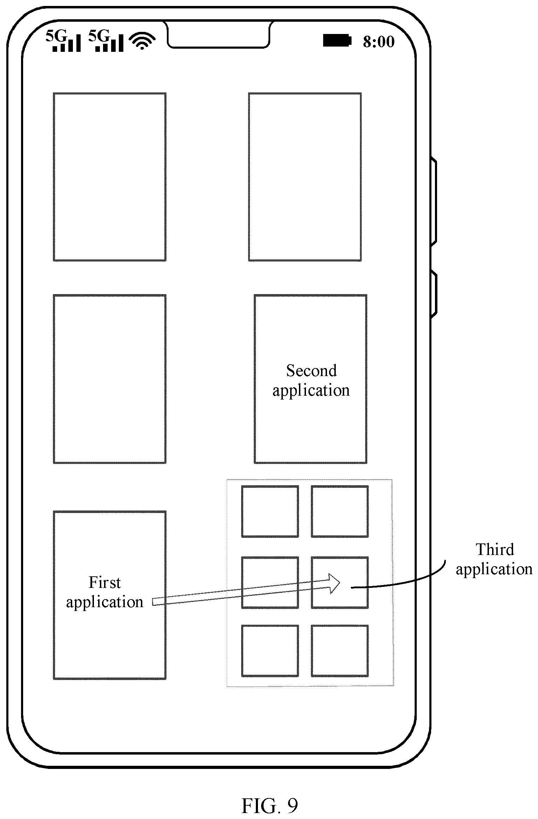

FIG. 9 is a schematic diagram of another task list interface according to an embodiment of this application;

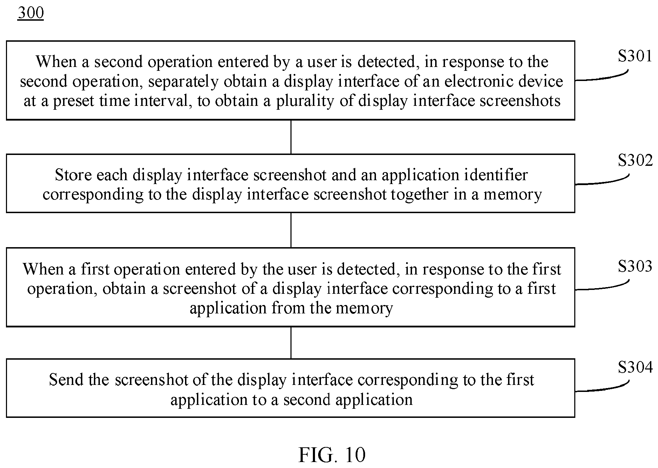

FIG. 10 is a schematic flowchart of still another picture sharing method according to an embodiment of this application;

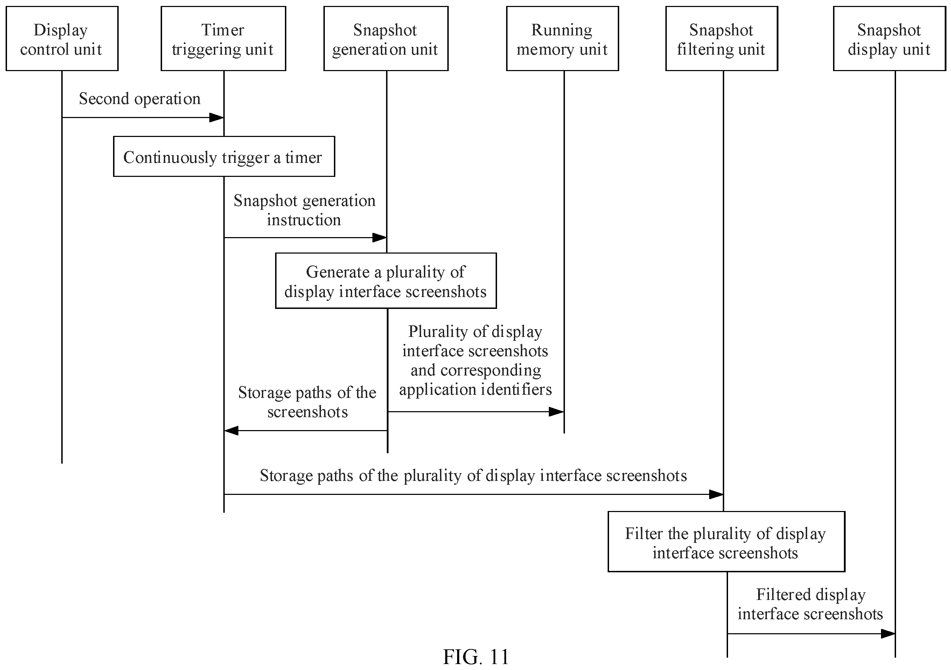

FIG. 11 is a schematic flowchart of still another picture sharing method according to an embodiment of this application;

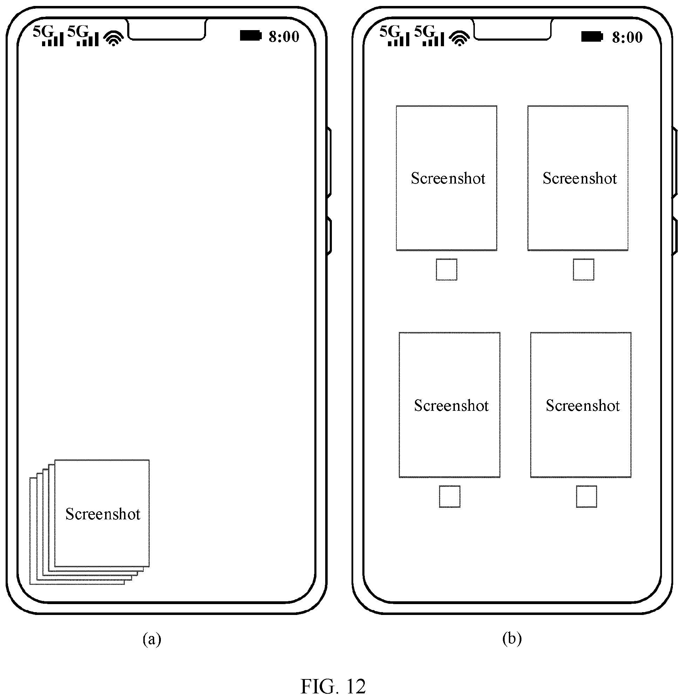

(a) in FIG. 12 is a schematic diagram of obtaining a thumbnail of a filtered display interface screenshot according to an embodiment of this application;
(b) in FIG. 12 is a schematic diagram of displaying a filtered display interface screenshot according to an embodiment of this application;

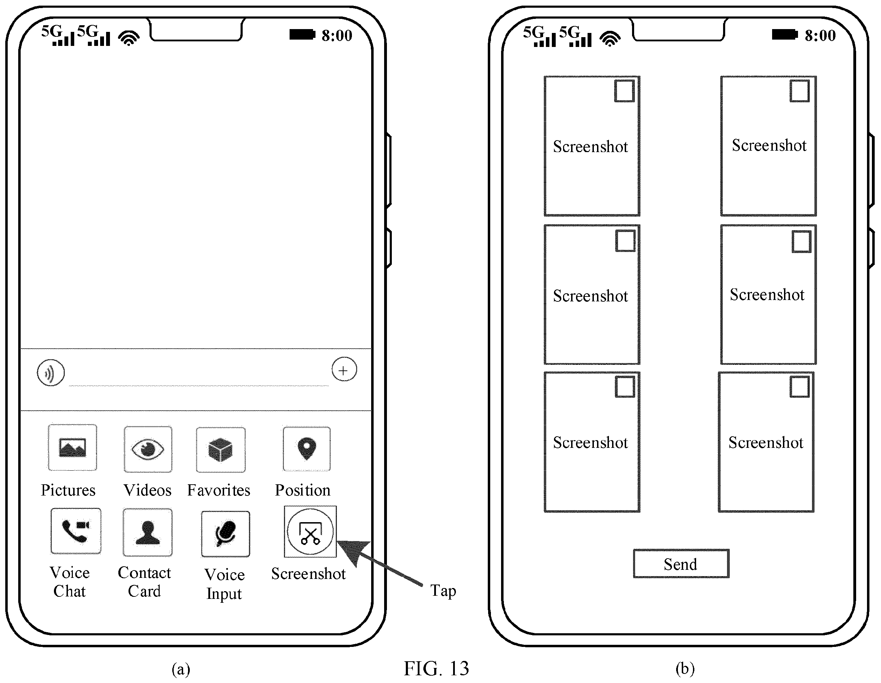

(a) in FIG. 13 is a schematic diagram of a chat interface of a chat application according to an embodiment of this application; and
(b) in FIG. 13 is another schematic diagram of displaying a display interface screenshot according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first", "second", and "third" mentioned below are merely intended for a purpose of description, and shall not be understood as an indication or implication of relative importance or an implicit indication of a quantity of indicated technical features. Therefore, a feature limited by "first", "second", or "third" may explicitly or implicitly include one or more features.

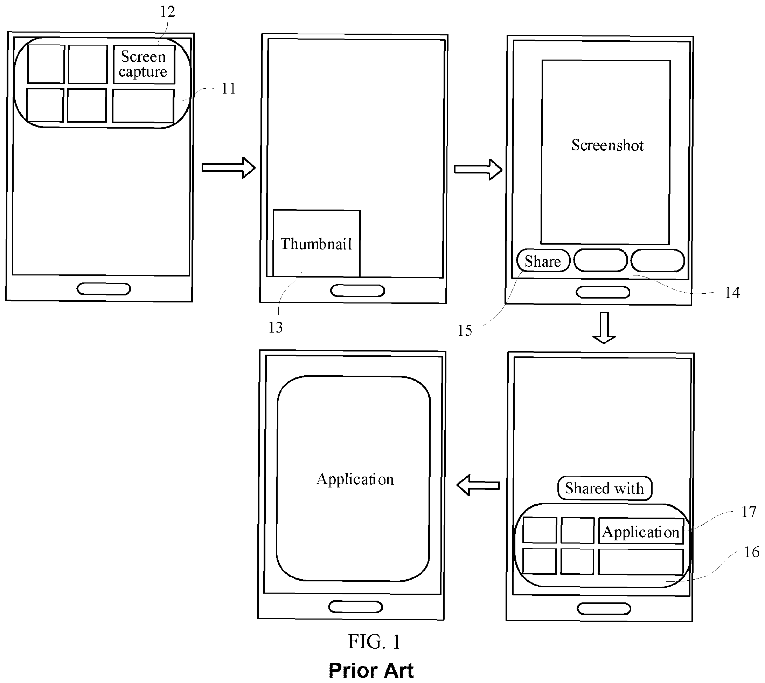

Currently, when using an electronic device such as a mobile phone, a tablet computer, or a smartwatch, a user frequently captures a screenshot of a display interface of the electronic device and shares the screenshot with an application. For example, a screenshot of a video interface is captured and shared with a contact in instant messaging software, or a screenshot of a commodity interface is captured and shared with a contact in instant messaging software, or a contact in an email. As shown in FIG. 1, a screen-capture sharing process in a conventional technology generally includes the following steps: The user presses a screen-capture shortcut key (for example, a power button + a volume down button) to trigger a screen-capture instruction, or the user pulls out a function area 11 and taps a screen-capture button 12 in the function area 11 to trigger a screen-capture instruction; after receiving the screen-capture instruction, the electronic device performs screen capturing to obtain a screen capture and generates a thumbnail 13; after the user taps the thumbnail 13, the electronic device may display an operation area 14, where the operation area 14 includes a sharing option 15; and then, the user taps the sharing option 15 to enable the electronic device to display a list 16 of applications with which the screen capture may be shared, and then taps, in the list 16 of applications, an icon 17 corresponding to an application to complete the sharing process. It can be learned from the foregoing process that, in the conventional technology, a process of sharing a screen capture is relatively complicated, resulting in poor use experience of the user. In view of this, embodiments of this application provide a picture sharing method and an electronic device, to simplify an operation process of sharing a screen capture by a user, and greatly improve use experience of the user.

The picture sharing method provided in embodiments of this application may be applied to an electronic device having a display, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

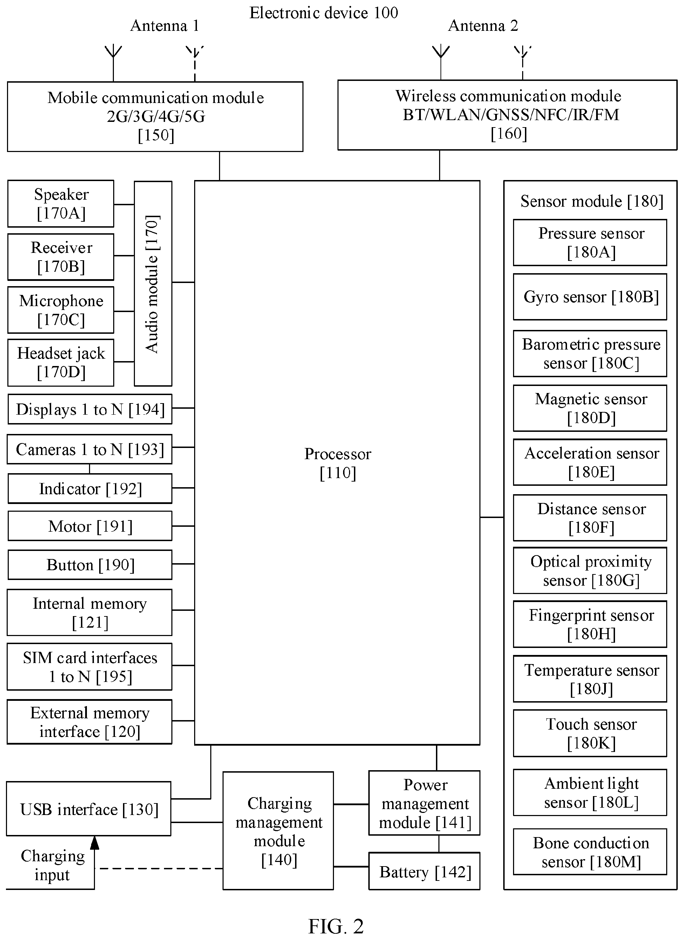

For example, FIG. 2 is a schematic diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus implements conversion between serial communication and parallel communication for data to be transmitted. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the electronic device 100. The charging management module 140 may further supply power to the electronic device through the power management module 141 when charging the battery 142.

The power management module 141 is configured to connect to the battery 142, the charging management module 140, and the processor 110. The power management module 141 receives input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Structures of the antenna 1 and the antenna 2 in FIG. 2 are merely examples. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various functional applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover or a leather case by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object by using the photodiode. When abundant reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. Visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive key input, and generate key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In an embodiment of this application, an Android system with a layered architecture is used as an example to describe a software structure of the electronic device 100.

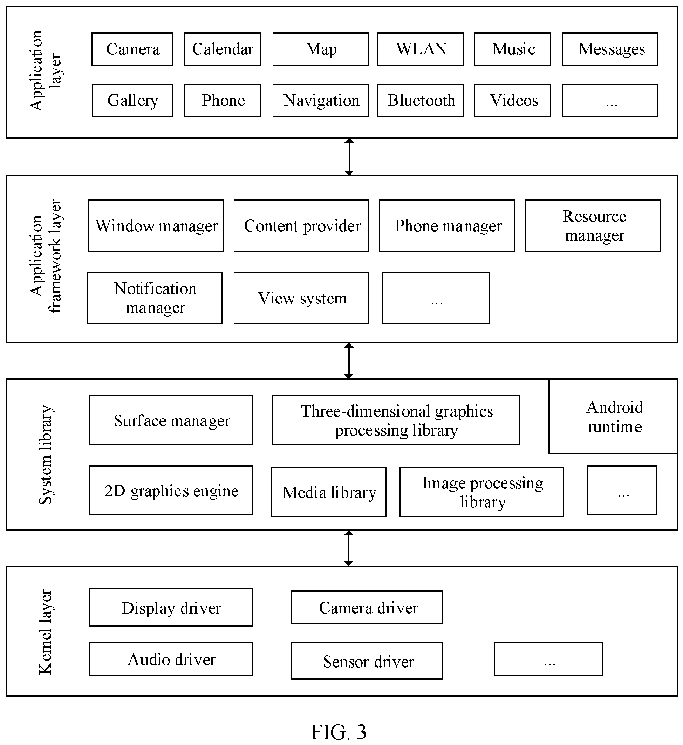

FIG. 3 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, capture a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a 2D graphics engine (for example, an SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 2 and FIG. 3 is used as an example to describe, in detail with reference to the accompanying drawings and application scenarios, the picture sharing method provided in embodiments of this application.

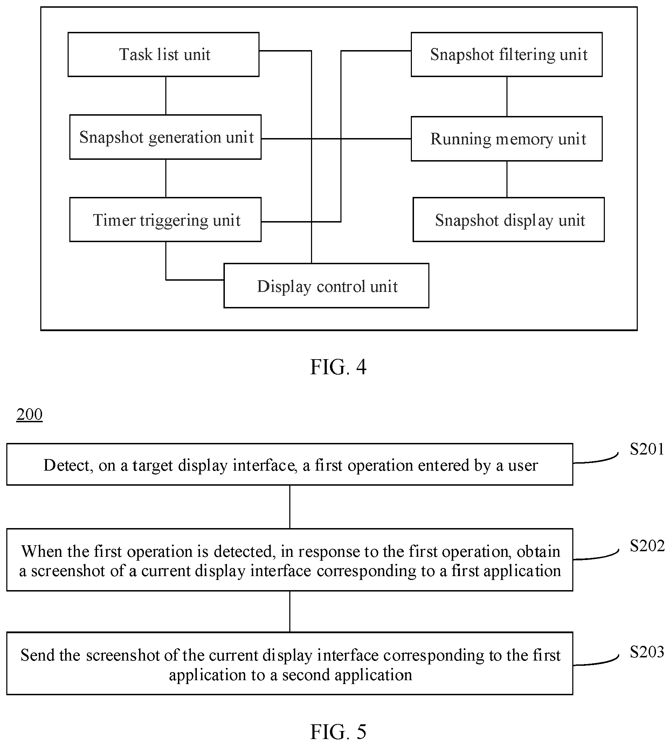

The picture sharing method provided in embodiments of this application may be applied to a system architecture shown in FIG. 4. The system architecture includes a snapshot generation unit, a task list unit, a timer triggering unit, a display control unit, a snapshot filtering unit, a running memory unit, and a snapshot display unit.

The task list unit is configured to: respond to a task list display instruction entered by a user, collect applications currently running on the electronic device, and display these applications in a list form; and is further configured to: respond to various operations such as a drag operation entered by the user on a task list interface, generate a snapshot generation instruction based on the drag operation entered by the user, and send the snapshot generation instruction to the snapshot generation unit.

The snapshot generation unit is configured to obtain a screenshot of a current display interface of the electronic device based on the received snapshot generation instruction, or may obtain an interface screenshot that is last displayed when an application is in a foreground running state.

The timer triggering unit is configured to send a snapshot generation instruction to the snapshot generation unit periodically or irregularly, to implement continuity of screen captures.

The display control unit is configured to: receive an interface switching instruction entered by the user, such as a tap operation or a slide operation; and change the display interface of the electronic device based on the interface switching instruction.

The snapshot filtering unit is configured to: filter the screenshot obtained by the snapshot generation unit, retain a screenshot that meets a filtering condition, store the screenshot in the running memory unit, and output a storage path of the screenshot.

The running memory unit is configured to store, for example, temporarily or permanently, the screenshot obtained by the snapshot filtering unit or the snapshot generation unit, and may perform reading, deletion, or the like based on an instruction entered by the user.

The snapshot display unit is configured to: respond to a snapshot display instruction entered by the user, and display the screenshot in the running memory unit, for example, display a thumbnail or display detailed information, and may be further configured to: receive a selection instruction entered by the user, and separately display a selected screenshot or perform other processing.

For a specific implementation process of each unit in the foregoing system architecture, refer to detailed descriptions of the following method embodiments. In an embodiment, FIG. 5 is a schematic flowchart of a picture sharing method 200 according to an embodiment of this application. The method includes the following steps.

S201: Detect, on a target display interface, a first operation entered by a user.

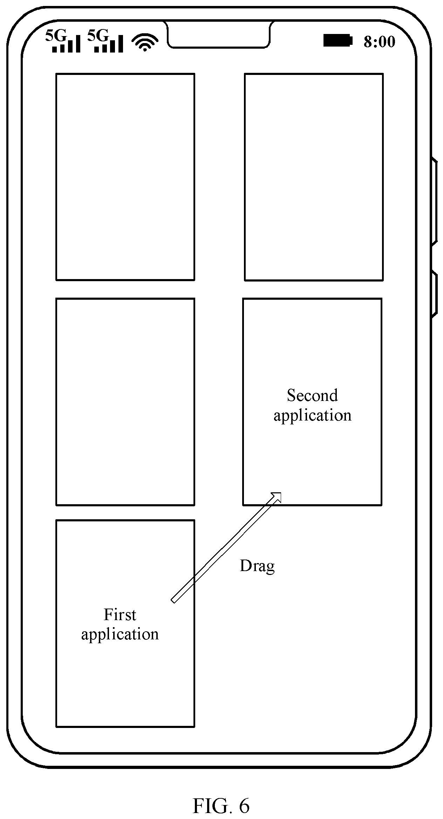

The target display interface may be a task list interface shown in FIG. 6. The task list interface displays applications that are currently in a running state on an electronic device, and these applications may be represented by current display interfaces of the applications. On the interface shown in FIG. 6, the electronic device may detect whether the user enters the first operation. The first operation may be dragging a current display interface of a first application to a position area in which a current display interface of a second application is located, or may be sequentially double-tapping the current display interface of the first application and the current display interface of the second application. A specific form of the first operation is not limited in this embodiment. Optionally, the applications on the target display interface may alternatively be represented by icons of the applications, for example, desktop icons or other icons that may identify the applications. In this case, the first operation may be dragging an icon of the first application to a position area in which an icon of the second application is located.

Optionally, when a display interface of the electronic device is not the target display interface, the electronic device may further receive an interface switching instruction entered by the user, and switch the display interface to the target display interface. Optionally, the interface switching instruction may be any operation instruction of operations entered by the user, such as double-tapping a home button, double-tapping a back button, double-tapping a menu button, touching and holding any position on a screen for preset duration (for example, 2 seconds or 3 seconds), tapping a virtual function key for entering a multi-task list, and simultaneously pressing two specified physical buttons (for example, simultaneously pressing a power button and a volume up button). Further, the task list unit may further adjust, based on a quantity of applications, a size of a current display interface and a quantity of applications displayed on each screen.

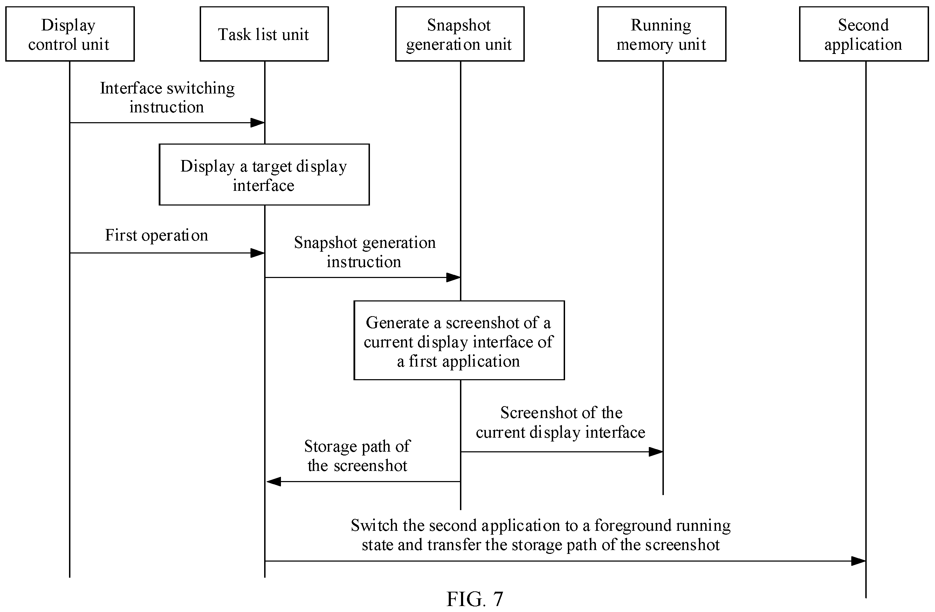

For example, as shown in FIG. 7, the display control unit may receive the interface switching instruction entered by the user, convert the interface switching instruction into an internal communication instruction, and invoke the task list unit through an interface. The task list unit obtains a list of applications that are currently in a running state, and displays the target display interface in a form of a current display interface of an application. Then, the display control unit detects the first operation entered by the user, obtains an application on which the user performs a drag operation, and keeps another application in a fixed position state when the application is dragged. Further, when the user performs the drag operation, prompt information of "sharing a screenshot" may be further displayed next to the dragged application, to prompt the user that a screenshot sharing operation may be performed, thereby improving use experience of the user.

S202: When the first operation is detected, in response to the first operation, obtain a screenshot of the current display interface corresponding to the first application.

Specifically, when the electronic device detects the first operation, it is assumed that the dragged application is the first application. In this case, in response to the first operation, the electronic device may obtain the screenshot of the current display interface corresponding to the first application, that is, a screenshot of an interface that is last displayed when the first application is in a foreground running state. Optionally, after obtaining the screenshot of the current display interface of the first application, the electronic device may further store the screenshot in a memory, and obtain a storage path. Optionally, the screenshot obtained by the electronic device may not include status bar information on the electronic device, for example, displayed information such as a battery level, a time, and a signal.

For example, as shown in FIG. 7, the task list unit may respond to the first operation, and send a snapshot generation instruction to the snapshot generation unit, where the snapshot generation instruction may include interface data of the current display interface of the first application. The snapshot generation unit generates, based on the interface data of the current display interface of the first application, the screenshot of the current display interface corresponding to the first application, stores the screenshot in the running memory unit, and returns a storage path to the task list unit.

S203: Send the screenshot of the current display interface corresponding to the first application to the second application.

If the first operation is a drag operation, an application corresponding to an endpoint position of the drag operation is the second application. The electronic device may send the obtained screenshot to the second application. Optionally, the electronic device may retrieve the screenshot from the memory based on the storage path of the screenshot, and send the screenshot to the second application; or send the storage path of the screenshot to the second application, so that the second application obtains the corresponding screenshot based on the storage path; or send a system broadcast carrying the screenshot to the second application, so that the second application obtains the corresponding screenshot from the system broadcast.

Optionally, after responding to the first operation, the electronic device may further obtain a screenshot of a historical display interface corresponding to the first application from the memory, for example, a screenshot obtained by the user by capturing a display interface of the first application before entering the first operation. There may be one or more such screenshots. Then, these screenshots are also sent to the second application.

Optionally, after responding to the first operation, the electronic device may further obtain, from the memory, a picture downloaded from the first application. For example, the first application is an instant messaging application, and the user using the electronic device receives, from the application, a picture sent by another contact and stores the picture. In this case, the electronic device may further obtain such stored pictures, and then send these pictures to the second application as well.

In a feasible manner, when sending the screenshot to the second application, the electronic device may switch the second application to the foreground running state. For example, as shown in FIG. 7, the task list unit may invoke a system interface to switch the second application to the foreground running state, and transfer the storage path of the screenshot to the second application through the interface. In another feasible manner, if the first application and the second application are displayed in a split-screen mode, the first application and the second application may be simultaneously switched to the foreground running state, and then the current display interface of the first application is dragged to the position area in which the current display interface of the second application is located, to obtain the screenshot of the current display interface corresponding to the first application and send the screenshot to the second application.

If the second application is an instant messaging application, (a) in FIG. 8 is a diagram of a display interface displayed when the second application is switched to the foreground running state. A contact list may be displayed on the display interface. After receiving a contact selection operation of the user, the electronic device may determine a target contact, and send the obtained screenshot to the target contact. For example, the user may directly tap the target contact to share the screenshot with a contact with whom the user wants to share the screenshot.

If the second application is an email application, (b) in FIG. 8 is a diagram of a display interface displayed when the second application is switched to the foreground running state. A new email may be displayed on the display interface. The obtained screenshot is used as an attachment of the new email, or the screenshot is used as a body of the new email. In this case, the user only needs to fill in a recipient to send the screenshot email to a contact to whom the user wants to send the screenshot email.

If the second application is a shopping application, a mobile banking application, or the like, the second application may perform image recognition on the obtained screenshot to obtain a recognition result, and determine the recognition result as content to be searched for. If the second application is the shopping application, the recognition result may be a commodity name or a commodity type. If the second application is the mobile banking application, the recognition result may be a bank card number. In this embodiment of this application, if the second application is of a different type, a manner of performing image recognition on the screenshot may also be different, and the obtained recognition result may also be different. In this case, the second application may directly input the recognition result into a search box, and the user only needs to tap a confirmation button to search for the content corresponding to the screenshot.

In the foregoing embodiment, the user may share the screenshot of the current display interface of the first application with the second application by entering the first operation on the target display interface of the electronic device. In this process, the user can complete screenshot sharing by performing only a simple drag or tap operation. Therefore, in this embodiment, a picture sharing process is relatively fast, time costs of sharing a screen capture by the user are reduced, and use experience of the user is greatly improved.

In another embodiment, the target display interface may alternatively be a task list interface shown in FIG. 9. The task list interface displays an application that is currently in a running state and an application that is not in the running state on the electronic device. The application that is in the running state may be represented by a current display interface of the application, and the application that is not in the running state may be represented by an icon of the application. Alternatively, both the application that is in the running state and the application that is not in the running state are represented by icons. On the interface shown in FIG. 9, it is assumed that the application that is in the running state includes a first application and a second application, and the application that is not in the running state includes a third application. The electronic device may detect whether the user enters a first operation. The first operation may be dragging a current display interface of the first application to a position area in which a current display interface of the second application is located, or may be dragging a current display interface of the first application (or the second application) to a position area in which an icon of the third application is located. That is, in this embodiment, a screenshot may be shared with an application that is not in the running state, in addition to being shared with an application that is in the running state. When the electronic device sends the screenshot to the third application that is not in the running state, the third application may be woken up and set to the foreground running state.

Optionally, the application that is not in the running state and that is displayed on the target display interface may be all applications that are not in the running state and that are installed in the electronic device, or may be a preset application, or may be an application that has picture receiving and processing capabilities. These applications may be displayed in a fixed area of the target display interface, for example, in a small area of the target display interface or on any one of upper, lower, left, and right sides of the target display interface; or may be displayed on a screen desktop of the electronic device. The application that has picture receiving and processing capabilities may be an application that subscribes to a content sharing system broadcast. It may be understood that a configuration file of an application generally includes system broadcasts to which the application subscribes. If the application subscribes to a content sharing broadcast, it indicates that the application may perform content sharing (for example, sharing a screenshot, a file, a document, a video, or audio), and therefore the application may receive and process a screenshot sent by the electronic device. If some applications do not subscribe to a content sharing broadcast (for example, applications such as Weather Forecast, Calendar, Camera, and Clock), the electronic device may not display these applications on the target display interface, so that a quantity of icons that are not in a running state and that are on the target display interface may be reduced. Therefore, the user can more quickly find an application with which the user wants to share a screenshot, thereby further improving a speed of sharing a screenshot by the user, and further improving use experience of the user.

Optionally, the electronic device may alternatively display the target display interface on a plurality of pages. In this way, when the screen cannot fully display the application that is currently in the running state and the application that is not in the running state, the user may view and select, by sliding pages, an application from which a screenshot needs to be captured and an application with which the screenshot needs to be shared.

In the foregoing embodiment, the screenshot of the current display interface of the first application may be shared with an application that is not in the running state, in addition to being shared with an application that is in the running state. This improves selectivity of sharing the screenshot by the user, and further improves user experience.

In still another embodiment, after responding to the first operation, the electronic device may further obtain, from the memory, a display interface screenshot that is corresponding to the first application and that is obtained in a continuous screenshot mode. In some application scenarios, when watching a dynamically changing image such as a video or an animation, if the user sees a wonderful image, the user may want to capture a screenshot of the wonderful image and share the screenshot with others, or watch the image in the future. Because images of some videos, animations, and the like change quickly, it is sometimes difficult for the user to accurately capture a frame of image that the user wants to capture. Consequently, the user needs to repeatedly capture screenshots, and an operation is complicated. In this case, the electronic device in this embodiment may provide the continuous screenshot mode. After the mode is enabled, the electronic device may continuously capture and store a plurality of screenshots, so that the frame of image that the user wants to capture may be captured with a higher probability. FIG. 10 is a schematic flowchart of another picture sharing method 300 according to an embodiment of this application. The method specifically includes the following steps.

S301: When a second operation entered by a user is detected, in response to the second operation, separately obtain a display interface of an electronic device at a preset time interval, to obtain a plurality of display interface screenshots.

Specifically, the second operation may be any one of the following operations performed by the user on a screen: double-tap, tapping a continuous screenshot control, and pressing a continuous screenshot shortcut key (for example, simultaneously pressing a volume up button and a home button), or may be another operation. This is not limited in this embodiment of this application. After detecting the second operation, the electronic device may respond to the second operation and enable a continuous screenshot mode. After enabling the continuous screenshot mode, the electronic device may capture, at a preset time interval, a screenshot of a display interface displayed on the screen. The time interval may be any interval between 0.5 seconds and 2 seconds, or may be another relatively short time interval. Optionally, a condition for stopping the continuous screenshot mode may be further set on the electronic device. For example, the continuous screenshot mode is stopped by the user by entering an instruction for disabling the continuous screenshot mode; or a quantity of screenshots (for example, 20) is set, and the electronic device automatically stops the continuous screenshot mode after capturing the quantity of screenshots; or screenshot duration (for example, 30 seconds) is set, and the electronic device automatically stops the continuous screenshot mode after running in the continuous screenshot mode for the duration. Optionally, the electronic device may further change the time interval. For example, the display interface of the electronic device is obtained at a time interval of 0.5 seconds in a previous time period, and the display interface of the electronic device is obtained at a time interval of 1 second in a latter time period.

For example, as shown in FIG. 11, the display control unit may detect the second operation entered by the user, and when the second operation is detected, send an instruction to the timer triggering unit. The timer triggering unit continuously triggers a timer at a preset time interval to send a snapshot generation instruction to the snapshot generation unit, and the snapshot generation unit continuously obtains the display interface of the electronic device to generate a plurality of display interface screenshots. For example, the preset time interval is 1 second, and a preset quantity of triggering times is 20. In this case, the timer triggering unit triggers the timer once every 1 second to send the snapshot generation instruction to the snapshot generation unit, and triggers the timer for 20 times in total. The snapshot generation unit may capture 20 screenshots, and the screenshots are at an interval of 1 second in time.

S302: Store each display interface screenshot and an application identifier corresponding to the display interface screenshot together in a memory.

S303: When a first operation entered by the user is detected, in response to the first operation, obtain a screenshot of a display interface corresponding to a first application from the memory.

The obtained plurality of display interface screenshots may include a screenshot of a home screen interface of the electronic device, may include the screenshot of the display interface of the first application, and may further include a screenshot of a display interface of a second application. That is, in the continuous screenshot mode, a screenshot of an interface displayed on the screen of the electronic device is captured. Therefore, to distinguish between screenshots of applications corresponding to the display interface screenshots, when obtaining a display interface screenshot, the electronic device may record an application that is currently in a foreground running state, and store the display interface screenshot and an application identifier of the application in the memory in correspondence. When detecting the first operation, the electronic device may obtain, from the memory, a screenshot of a display interface corresponding to an application identifier of the first application. Optionally, the application identifier may be an application name, an ID, or the like. A correspondence between the display interface screenshot and the application identifier may be stored in the memory in a manner of a data table, a database, or the like. A storage manner is not limited in this embodiment of this application.

For example, as shown in FIG. 11, the snapshot generation unit may store each display interface screenshot and the application identifier corresponding to the display interface screenshot together in the running memory unit, and return a storage path to the timer triggering unit.

S304: Send the screenshot of the display interface corresponding to the first application to the second application.

For an implementation process of S304, refer to the description of S203 in the foregoing embodiment. A technical principle and an effect of S304 are similar to those of S203, and details are not described herein.

In the foregoing embodiment, the electronic device obtains a plurality of display interface screenshots in the continuous screenshot mode, and when receiving a screenshot sharing operation of the user, sends all display interface screenshots corresponding to the first application to the second application, so that the user does not need to perform sequential selection. This reduces a quantity of selection times of the user, and improves picture sharing efficiency of the user.

In still another embodiment, after the plurality of display interface screenshots are stored in S302, the electronic device may filter the plurality of display interface screenshots. Optionally, the electronic device may perform filtering based on content of the display interface screenshots. For example, when the obtained display interface screenshots are continuous screenshots of a video, if subtitles in two or more display interface screenshots are the same, the electronic device may retain only one of the display interface screenshots. Optionally, the electronic device may further delete, from the plurality of display interface screenshots, a screenshot whose screenshot time exceeds a specified time.

In a feasible manner, the electronic device may alternatively perform filtering based on a similarity between the display interface screenshots. The electronic device may separately calculate similarities between one display interface screenshot and other display interface screenshots, and group display interface screenshots whose similarity is greater than a similarity threshold into one group; and then in remaining display interface screenshots, separately calculate similarities between one display interface screenshot and other display interface screenshots, and group display interface screenshots whose similarity is greater than the similarity threshold into another group, and so on. For example, there are five screenshots in total. Before grouping, the five screenshots are all ungrouped screenshots. For the five ungrouped screenshots, the electronic device determines similarities between a first ungrouped screenshot and the remaining four ungrouped screenshots. If a similarity between the first ungrouped screenshot and a second ungrouped screenshot and a similarity between the first ungrouped screenshot and a third ungrouped screenshot are both greater than the similarity threshold, the first ungrouped screenshot, the second ungrouped screenshot, and the third ungrouped screenshot are grouped into one group. The remaining fourth ungrouped screenshot and fifth ungrouped screenshot are still ungrouped screenshots. Then, the electronic device determines that a similarity between the fourth ungrouped screenshot and the fifth ungrouped screenshot is greater than the similarity threshold, and groups the fourth ungrouped screenshot and the fifth ungrouped screenshot into another group.

Optionally, the similarity threshold may be preset, for example, 90% or another value. An algorithm for calculating a similarity between screenshots may be any similarity algorithm. For example, the similarity between screenshots may be determined by calculating a cosine similarity between screenshots, a structural similarity index, histogram information, fingerprint information, or the like. Similarity calculation is not described in detail in this embodiment of this application. Further, a maximum quantity of groups may be further set on the electronic device. If a quantity of groups obtained after the display interface screenshots are grouped is greater than the maximum quantity of groups, the similarity threshold may be reduced, so that an actual quantity of groups is less than or equal to the maximum quantity of groups. For example, it is assumed that five screenshots are captured, and after the five screenshots are grouped based on similarities between the screenshots, a quantity of groups is 3 (a first screenshot and a second screenshot are in one group, a third screenshot is in one group, and a fourth screenshot and a fifth screenshot are in one group). If the maximum quantity of groups is set to 2, because 3 is greater than 2, regrouping needs to be performed.

In another feasible manner, the electronic device may alternatively calculate a similarity between every two adjacent screenshots. If the similarity between the two adjacent screenshots is greater than a similarity threshold, the two screenshots are grouped into one group, to complete grouping. For example, five screenshots are captured, and if a similarity between a first screenshot and a second screenshot is greater than the similarity threshold, the first screenshot and the second screenshot are grouped into one group, if a similarity between the second screenshot and a third screenshot is greater than the similarity threshold, the second screenshot and the third screenshot are grouped into one group, if a similarity between the third screenshot and a fourth screenshot is not greater than the similarity threshold, the third screenshot and the fourth screenshot are grouped into different groups; and if a similarity between the fourth screenshot and a fifth screenshot is greater than a second similarity threshold, the fourth screenshot and the fifth screenshot are grouped into one group. Therefore, the first screenshot, the second screenshot, and the third screenshot are grouped into one group, and the fourth screenshot and the fifth screenshot are grouped into another group. For a dynamic image such as a video, an image of the video generally changes over time. If a similarity between two adjacent screenshots is relatively high, it indicates that the image of the video does not change greatly. Screenshots may be quickly grouped by calculating a similarity between every two adjacent screenshots.

After obtaining a plurality of groups of display interface screenshots, the electronic device may select one display interface screenshot from each group, delete remaining unselected display interface screenshots, and then store the selected display interface screenshot and an application identifier corresponding to the selected display interface screenshot in the memory, so that memory power consumption of the electronic device may be reduced. Optionally, for any group of display interface screenshots, the electronic device may randomly select one of the display interface screenshots, or select a display interface screenshot with a latest or earliest screenshot time for retention. A selection manner is not limited in this embodiment of this application. Further, after obtaining filtered display interface screenshots, as shown in (a) in FIG. 12, the electronic device may further display these screenshots in a form of a thumbnail. When the user taps the thumbnail, the electronic device may jump to an interface displayed in (b) in FIG. 12. The interface may display the filtered display interface screenshots, and may further provide a selection option for the user to select to share a display interface screenshot, or add a display interface screenshot to Favorites, or the like. The filtered display interface screenshots are displayed, so that the user can more easily select an expected picture, thereby improving experience.

For example, as shown in FIG. 11, the timer triggering unit may send storage paths of a plurality of display interface screenshots to the snapshot filtering unit. The snapshot filtering unit filters the plurality of display interface screenshots, and sends filtered display interface screenshots to the running memory unit. When the user taps the thumbnail shown in (a) in FIG. 12, the snapshot filtering unit may further send the filtered display interface screenshots to the snapshot display unit for displaying, and provide a selection option.

In the foregoing embodiment, the obtained plurality of display interface screenshots are filtered, and only the filtered display interface screenshots are stored, so that memory power consumption of the electronic device may be greatly reduced. In addition, when the filtered display interface screenshots are displayed to the user, a quantity of displayed screenshots may be reduced, so that the user can more easily select an expected picture, thereby further improving use experience of the user.

In some application scenarios, some applications may provide an interface for invoking a display interface screenshot in the memory, and present the interface to the user in a form of a button or an option. In this case, when using the applications, the user may directly tap the button or the option. After receiving the tap operation, the electronic device may present, to the user, all display interface screenshots currently in the memory or a display interface screenshot corresponding to a specified application. (a) in FIG. 13 is a chat interface of a chat application, and the chat interface provides a "Screenshot" button. After the user taps the button, the electronic device may jump to an interface in (b) in FIG. 13. The interface displays all display interface screenshots currently in the memory. On the interface, the user may select one or more screenshots, and instantly send the selected screenshots to a current chat partner. Optionally, the screenshots displayed on the interface in (b) in FIG. 13 may be displayed based on a screenshot time from latest to earliest or from earliest to latest. A display manner is not limited in this embodiment of this application.

Optionally, the screenshots displayed on the interface in (b) in FIG. 13 may alternatively be the filtered display interface screenshots. For example, after the application receives a tap operation entered by the user, the application may trigger the snapshot filtering unit to send the filtered display interface screenshots to the snapshot display unit, and the snapshot display unit displays the filtered display interface screenshots and provides a selection function. After the user selects one or more screenshots, the snapshot display unit sends a selection result of the user to the application for a subsequent sharing procedure. In this embodiment of this application, if the application is instant messaging software, after receiving a screenshot, the application may send the screenshot to a contact selected by the user. If the application is an email application, after receiving a screenshot, the application may use the screenshot as an attachment of a new email or as body content of a new email, and display a creation interface of the new email. If the application is of a different type, an operation performed by the application after the application receives a screenshot may also be different. This is not limited in this embodiment of this application.

In the foregoing embodiment, the user may tap the screenshot option in the application, to obtain a screenshot that is captured and stored by the electronic device, and the obtained screenshot is a screen capture that the user may want to send. Therefore, the user can capture and share a screenshot without switching between different applications, so that a screenshot sharing operation of the user is faster and more convenient, thereby improving experience.

The foregoing describes in detail the example of the picture sharing method provided in embodiments of this application. It may be understood that, to implement the foregoing functions, the electronic device includes corresponding hardware and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the electronic device may be divided into functional modules based on the foregoing method example. For example, each functional module corresponding to each function, for example, a processing unit and a display unit, may be obtained through division, or two or more functions may be integrated into one module. The integrated module may be implemented in a form of hardware, or may be implemented in a form of a software functional module. It should be noted that, in embodiments of this application, module division is an example, and is merely a logical function division. In actual implementation, another division manner may be used.

It should be noted that all related content of the steps in the foregoing method embodiments may be cited in function description of corresponding functional modules. Details are not described herein.

The electronic device provided in this embodiment is configured to perform the foregoing picture sharing method, and therefore can achieve a same effect as the foregoing implementation method.

When an integrated unit is used, the electronic device may further include a processing module, a storage module, and a communication module. The processing module may be configured to control and manage an action of the electronic device. The storage module may be configured to support the electronic device in storing program code, data, and the like. The communication module may be configured to support communication between the electronic device and another device.

The processing module may be a processor or a controller. The processor or the controller may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device with the structure shown in FIG. 2.

An embodiment of this application further provides a computer-readable storage medium. The computer-readable storage medium stores a computer program, and when the computer program is executed by a processor, the processor is enabled to perform the picture sharing method in any one of the foregoing embodiments.

An embodiment of this application further provides a computer program product. When the computer program product is run on a computer, the computer is enabled to perform the foregoing related steps to implement the picture sharing method in the foregoing embodiments.

In addition, an embodiment of this application further provides an apparatus. The apparatus may be specifically a chip, a component, or a module. The apparatus may include a processor and a memory that are connected to each other. The memory is configured to store computer executable instructions. When the apparatus runs, the processor may execute the computer executable instructions stored in the memory, so that the chip performs the picture sharing method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A picture sharing method, applied to an electronic device, wherein the method comprises:
when a first operation entered by a user by using a target display interface is detected (S201), in response to the first operation, obtaining (S202, S303) a screenshot of at least one display interface corresponding to a first application; and
sending (S203, S304) the screenshot of the at least one display interface to a second application, wherein the target display interface comprises at least one of an icon of the first application and a current display interface of the first application, the target display interface comprises at least one of an icon of the second application and a current display interface of the second application, and the first operation comprises dragging the at least one of the icon of the first application and the current display interface of the first application to a position area in which the at least one of the icon of the second application and the current display interface of the second application is located;
wherein the obtaining (S202, S303) a screenshot of at least one display interface corresponding to a first application comprises:
obtaining an application identifier of the first application; and
obtaining, from a memory, a screenshot of a display interface corresponding to the application identifier of the first application;
**characterized in that**
a screenshot stored in the memory is obtained by filtering a candidate screenshot set, and the candidate screenshot set comprises all screenshots obtained by capturing a display interface of the electronic device.

2. The method according to claim 1, wherein a manner of filtering the candidate screenshot set comprises:
grouping display interface screenshots in the candidate screenshot set, and selecting a target display interface screenshot from each group of display interface screenshots, wherein a similarity between display interface screenshots in each group of display interface screenshots is greater than or equal to a similarity threshold.

3. The method according to claim 1 or 2, wherein a manner of obtaining the candidate screenshot set comprises:
when a second operation entered by the user is detected (S301), in response to the second operation, separately capturing the display interface of the electronic device at a preset time interval, to obtain the candidate screenshot set, wherein the second operation is used by the electronic device to enable a continuous screenshot mode.

4. The method according to any one of claims 1 to 3, wherein the icon of the first application and the icon of the second application are desktop icons.

5. An electronic device, comprising:
one or more processors (110);
one or more memories (121); and
a module on which a plurality of applications are installed, wherein
the memory (121) stores one or more programs, and when the one or more programs are executed by the processor (110), the electronic device is enabled to perform the following steps:
when a first operation entered by a user by using a target display interface is detected, in response to the first operation, obtaining a screenshot of at least one display interface corresponding to a first application; and
sending the screenshot of the at least one display interface to a second application, wherein the target display interface comprises at least one of an icon of the first application and a current display interface of the first application, the target display interface comprises at least one of an icon of the second application and a current display interface of the second application, and the first operation comprises dragging the at least one of the icon of the first application and the current display interface of the first application to a position area in which the at least one of the icon of the second application and the current display interface of the second application is located;
wherein when the one or more programs are executed by the processor (110), the electronic device is enabled to perform the following steps:
obtaining an application identifier of the first application; and
obtaining, from the memory (121), a screenshot of a display interface corresponding to the application identifier of the first application;
**characterized in that**
a screenshot stored in the memory is obtained by filtering a candidate screenshot set, and the candidate screenshot set comprises all screenshots obtained by capturing a display interface of the electronic device.

6. The electronic device according to claim 5, wherein when the one or more programs are executed by the processor (110), the electronic device is enabled to perform the following step:
grouping display interface screenshots in the candidate screenshot set, and selecting a target display interface screenshot from each group of display interface screenshots, wherein a similarity between display interface screenshots in each group of display interface screenshots is greater than or equal to a similarity threshold.

7. The electronic device according to claim 5 or 6, wherein when the one or more programs are executed by the processor (110), the electronic device is enabled to perform the following step:
when a second operation entered by the user is detected, in response to the second operation, separately capturing the display interface of the electronic device at a preset time interval, to obtain the candidate screenshot set, wherein the second operation is used by the electronic device to enable a continuous screenshot mode.

8. The electronic device according to any one of claims 5 to 7, wherein the icon of the first application and the icon of the second application are desktop icons.

9. A computer-readable storage medium, wherein the computer-readable storage medium stores a computer program, and when the computer program is executed by a processor, the processor is enabled to perform the method according to any one of claims 1 to 4.

## Patentansprüche

1. Bildteilungsverfahren, angewandt auf eine elektronische Vorrichtung, wobei das Verfahren Folgendes umfasst:
wenn eine erste Operation, die von einem Benutzer unter Verwendung einer Ziel-Anzeigeschnittstelle eingegeben wird, erkannt wird (S201), als Reaktion auf die erste Operation, Erlangen (S202, S303) eines Screenshots von mindestens einer Anzeigeschnittstelle, die einer ersten Anwendung entspricht; und
Senden (S203, S304) des Screenshots der mindestens einen Anzeigeschnittstelle an eine zweite Anwendung, wobei die Ziel-Anzeigeschnittstelle mindestens eines von einem Symbol der ersten Anwendung und einer aktuellen Anzeigeschnittstelle der ersten Anwendung umfasst, die Ziel-Anzeigeschnittstelle mindestens eines von einem Symbol der zweiten Anwendung und einer aktuellen Anzeigeschnittstelle der zweiten Anwendung umfasst und die erste Operation das Ziehen des mindestens einen von dem Symbol der ersten Anwendung und der aktuellen Anzeigeschnittstelle der ersten Anwendung in einen Positionsbereich umfasst, in dem sich das mindestens eine von dem Symbol der zweiten Anwendung und der aktuellen Anzeigeschnittstelle der zweiten Anwendung befindet;
wobei das Erlangen (S202, S303) eines Screenshots von mindestens einer Anzeigeschnittstelle, die einer ersten Anwendung entspricht, Folgendes umfasst:
Erlangen eines Anwendungsbezeichners der ersten Anwendung; und
Erlangen, aus einem Speicher, eines Screenshots von einer Anzeigeschnittstelle, die dem Anwendungsbezeichner der ersten Anwendung entspricht;
**dadurch gekennzeichnet, dass** ein in dem Speicher gespeicherter Screenshot durch Filtern eines Kandidatensatzes von Screenshots erlangt wird und der Kandidatensatz von Screenshots alle von Screenshots umfasst, die durch Erfassen einer Anzeigeschnittstelle der elektronischen Vorrichtung erlangt werden.

2. Verfahren gemäß Anspruch 1, wobei eine Art des Filterns des Kandidatensatzes von Screenshots Folgendes umfasst:
Gruppieren von Screenshots der Anzeigeschnittstelle in dem Kandidatensatz von Screenshots und Auswählen eines Ziel-Screenshots der Anzeigeschnittstelle aus jeder Gruppe von Screenshots der Anzeigeschnittstelle, wobei eine Ähnlichkeit zwischen Screenshots der Anzeigeschnittstelle in jeder Gruppe von Screenshots der Anzeigeschnittstelle größer als oder gleich einem Ähnlichkeitsschwellenwert ist.

3. Verfahren gemäß Anspruch 1 oder 2, wobei eine Art des Erlangens des Kandidatensatzes von Screenshots Folgendes umfasst:
wenn eine zweite Operation, die von dem Benutzer eingegeben wird, erkannt wird (S301), als Reaktion auf die zweite Operation, separates Erfassen der Anzeigeschnittstelle der elektronischen Vorrichtung in einem voreingestellten Zeitintervall, um den Kandidatensatz von Screenshots zu erlangen, wobei die zweite Operation durch die elektronische Vorrichtung verwendet wird, um einen kontinuierlichen Screenshot-Modus zu aktivieren.

4. Verfahren gemäß einem der Ansprüche 1 bis 3, wobei das Symbol der ersten Anwendung und das Symbol der zweiten Anwendung Desktopsymbole sind.

5. Elektronische Vorrichtung, umfassend:
einen oder mehrere Prozessoren (110);
einen oder mehrere Speicher (121); und
ein Modul, auf dem eine Vielzahl von Anwendungen installiert ist, wobei
der Speicher (121) ein oder mehrere Programme speichert und, wenn das eine oder die mehreren Programme durch den Prozessor (110) ausgeführt werden, die elektronische Vorrichtung in die Lage versetzt wird, die folgenden Schritte durchzuführen:
wenn eine erste Operation, die von einem Benutzer unter Verwendung einer Ziel-Anzeigeschnittstelle eingegeben wird, erkannt wird, als Reaktion auf die erste Operation, Erlangen eines Screenshots von mindestens einer Anzeigeschnittstelle, die einer ersten Anwendung entspricht; und
Senden des Screenshots der mindestens einen Anzeigeschnittstelle an eine zweite Anwendung, wobei die Ziel-Anzeigeschnittstelle mindestens eines von einem Symbol der ersten Anwendung und einer aktuellen Anzeigeschnittstelle der ersten Anwendung umfasst, die Ziel-Anzeigeschnittstelle mindestens eines von einem Symbol der zweiten Anwendung und einer aktuellen Anzeigeschnittstelle der zweiten Anwendung umfasst und die erste Operation das Ziehen des mindestens einen von dem Symbol der ersten Anwendung und der aktuellen Anzeigeschnittstelle der ersten Anwendung in einen Positionsbereich umfasst, in dem sich das mindestens eine von dem Symbol der zweiten Anwendung und der aktuellen Anzeigeschnittstelle der zweiten Anwendung befindet;
wobei, wenn das eine oder die mehreren Programme durch die Prozessor (110) ausgeführt werden, die elektronische Vorrichtung in die Lage versetzt wird, die folgenden Schritte durchzuführen:
Erlangen eines Anwendungsbezeichners der ersten Anwendung; und
Erlangen, aus dem Speicher (121), eines Screenshots von einer Anzeigeschnittstelle, die dem Anwendungsbezeichner der ersten Anwendung entspricht;
**dadurch gekennzeichnet, dass** ein in dem Speicher gespeicherter Screenshot durch Filtern eines Kandidatensatzes von Screenshots erlangt wird und der Kandidatensatz von Screenshots alle von Screenshots umfasst, die durch Erfassen einer Anzeigeschnittstelle der elektronischen Vorrichtung erlangt werden.

6. Elektronische Vorrichtung gemäß Anspruch 5, wobei, wenn das eine oder die mehreren Programme durch den Prozessor (110) ausgeführt werden, die elektronische Vorrichtung in die Lage versetzt wird, den folgenden Schritt durchzuführen:
Gruppieren von Screenshots der Anzeigeschnittstelle in dem Kandidatensatz von Screenshots und Auswählen eines Ziel-Screenshots der Anzeigeschnittstelle aus jeder Gruppe von Screenshots der Anzeigeschnittstelle, wobei eine Ähnlichkeit zwischen Screenshots der Anzeigeschnittstelle in jeder Gruppe von Screenshots der Anzeigeschnittstelle größer als oder gleich einem Ähnlichkeitsschwellenwert ist.

7. Elektronische Vorrichtung gemäß Anspruch 5 oder 6, wobei, wenn das eine oder die mehreren Programme durch den Prozessor (110) ausgeführt werden, die elektronische Vorrichtung in die Lage versetzt wird, den folgenden Schritt durchzuführen:
wenn eine zweite Operation, die von dem Benutzer eingegeben wird, erkannt wird, als Reaktion auf die zweite Operation, separates Erfassen der Anzeigeschnittstelle der elektronischen Vorrichtung in einem voreingestellten Zeitintervall, um den Kandidatensatz von Screenshots zu erlangen, wobei die zweite Operation durch die elektronische Vorrichtung verwendet wird, um einen kontinuierlichen Screenshot-Modus zu aktivieren.

8. Elektronische Vorrichtung gemäß einem der Ansprüche 5 bis 7, wobei das Symbol der ersten Anwendung und das Symbol der zweiten Anwendung Desktopsymbole sind.

9. Computerlesbares Speichermedium, wobei das computerlesbare Speichermedium ein Computerprogramm speichert, und, wenn das Computerprogramm durch einen Prozessor ausgeführt wird, der Prozessor in die Lage versetzt wird, das Verfahren gemäß einem der Ansprüche 1 bis 4 durchzuführen.

## Revendications

1. Procédé de partage d'image, appliqué à un dispositif électronique, dans lequel le procédé comprend :
lorsqu'une première opération entrée par un utilisateur à l'aide d'une interface d'affichage cible est détectée (S201), en réponse à la première opération, l'obtention (S202, S303) d'une capture d'écran d'au moins une interface d'affichage correspondant à une première application ; et
l'envoi (S203, S304) de la capture d'écran de l'au moins une interface d'affichage à une seconde application, dans lequel l'interface d'affichage cible comprend au moins une icône de la première application et une interface d'affichage actuelle de la première application, l'interface d'affichage cible comprend au moins une parmi une icône de la seconde application et une interface d'affichage actuelle de la seconde application, et la première opération comprend le glissement de l'au moins une parmi l'icône de la première application et l'interface d'affichage actuelle de la première application vers une zone de position dans laquelle l'au moins une parmi une icône de la seconde application et l'interface d'affichage actuelle de la seconde application se trouve ;
dans lequel l'obtention (S202, S303) d'une capture d'écran d'au moins une interface d'affichage correspondant à une première application comprend :
l'obtention d'un identifiant d'application de la première application ; et
l'obtention, à partir d'une mémoire, d'une capture d'écran d'une interface d'affichage correspondant à l'identifiant d'application de la première application ;
**caractérisé en ce qu'**une capture d'écran stockée dans la mémoire est obtenue en filtrant un ensemble de captures d'écran candidates, et l'ensemble de captures d'écran candidates comprend toutes les captures d'écran obtenues en capturant une interface d'affichage du dispositif électronique.

2. Procédé selon la revendication 1, dans lequel une manière de filtrer l'ensemble de captures d'écran candidates comprend :
le regroupement des captures d'écran d'interface d'affichage dans l'ensemble de captures d'écran candidates, et la sélection d'une capture d'écran d'interface d'affichage cible à partir de chaque groupe de captures d'écran d'interface d'affichage, dans lequel une similarité entre les captures d'écran d'interface d'affichage dans chaque groupe de captures d'écran d'interface d'affichage est supérieure ou égale à un seuil de similarité.

3. Procédé selon la revendication 1 ou 2, dans lequel une manière d'obtenir l'ensemble de captures d'écran candidates comprend :
lorsqu'une seconde opération entrée par l'utilisateur est détectée (S301), en réponse à la seconde opération, la capture séparée de l'interface d'affichage du dispositif électronique à un intervalle de temps prédéfini, pour obtenir l'ensemble de captures d'écran candidates, dans lequel la seconde opération est utilisée par le dispositif électronique pour activer un mode de capture d'écran continu.

4. Procédé selon l'une quelconque des revendications 1 à 3, dans lequel l'icône de la première application et l'icône de la seconde application sont des icônes de bureau.

5. Dispositif électronique, comprenant :
un ou plusieurs processeurs (110) ;
une ou plusieurs mémoires (121) ; et
un module sur lequel une pluralité d'applications sont installées, dans lequel
la mémoire (121) stocke un ou plusieurs programmes, et lorsque les un ou plusieurs programmes sont exécutés par le processeur (110), le dispositif électronique est activé pour réaliser les étapes suivantes :
lorsqu'une première opération entrée par un utilisateur à l'aide d'une interface d'affichage cible est détectée, en réponse à la première opération, l'obtention d'une capture d'écran d'au moins une interface d'affichage correspondant à une première application ; et
l'envoi de la capture d'écran de l'au moins une interface d'affichage à une seconde application, dans lequel l'interface d'affichage cible comprend au moins une icône de la première application et une interface d'affichage actuelle de la première application, l'interface d'affichage cible comprend au moins une parmi une icône de la seconde application et une interface d'affichage actuelle de la seconde application, et la première opération comprend le glissement de l'au moins une parmi l'icône de la première application et l'interface d'affichage actuelle de la première application vers une zone de position dans laquelle l'au moins une parmi une icône de la seconde application et l'interface d'affichage actuelle de la seconde application se trouve ;
dans lequel lorsque les un ou plusieurs programmes sont exécutés par le processeur (110), le dispositif électronique est activé pour réaliser les étapes suivantes :
l'obtention d'un identifiant d'application de la première application ; et
l'obtention, à partir de la mémoire (121), d'une capture d'écran d'une interface d'affichage correspondant à l'identifiant d'application de la première application ;
**caractérisé en ce qu'**une capture d'écran stockée dans la mémoire est obtenue en filtrant un ensemble de captures d'écran candidates, et l'ensemble de captures d'écran candidates comprend toutes les captures d'écran obtenues en capturant une interface d'affichage du dispositif électronique.

6. Dispositif électronique selon la revendication 5, dans lequel, lorsque les un ou plusieurs programmes sont exécutés par le processeur (110), le dispositif électronique est activé pour réaliser l'étape suivante :
le regroupement des captures d'écran d'interface d'affichage dans l'ensemble de captures d'écran candidates, et la sélection d'une capture d'écran d'interface d'affichage cible à partir de chaque groupe de captures d'écran d'interface d'affichage, dans lequel une similarité entre les captures d'écran d'interface d'affichage dans chaque groupe de captures d'écran d'interface d'affichage est supérieure ou égale à un seuil de similarité.

7. Dispositif électronique selon la revendication 5 ou 6, dans lequel, lorsque les un ou plusieurs programmes sont exécutés par le processeur (110), le dispositif électronique est activé pour réaliser l'étape suivante :
lorsqu'une seconde opération entrée par l'utilisateur est détectée, en réponse à la seconde opération, la capture séparée de l'interface d'affichage du dispositif électronique à un intervalle de temps prédéfini, pour obtenir l'ensemble de captures d'écran candidates, dans lequel la seconde opération est utilisée par le dispositif électronique pour activer un mode de capture d'écran continu.

8. Dispositif électronique selon l'une quelconque des revendications 5 à 7, dans lequel l'icône de la première application et l'icône de la seconde application sont des icônes de bureau.

9. Support de stockage lisible par ordinateur, dans lequel le support de stockage lisible par ordinateur stocke un programme informatique, et lorsque le programme informatique est exécuté par un processeur, le processeur est activé pour réaliser le procédé selon l'une quelconque des revendications 1 à 4.
